(19)

Europäisches
Patentamt
European
Patent Office
Office européen
des brevets

(11) **EP 2 267 426 B1**

(12) **EUROPEAN PATENT SPECIFICATION**

(45) Date of publication and mention
of the grant of the patent:
**04.01.2017 Bulletin 2017/01**

(51) Int Cl.:
***G01M 17/02*** *(2006.01)*    ***G01N 3/56*** *(2006.01)*

(21) Application number: **10179826.2**

(22) Date of filing: **16.01.2002**

(54) **A method of wear testing a tire**

Verfahren zur Verschleissprüfung eines Reifens

Procede d'essai d'usure d'un pneu

(84) Designated Contracting States:
**DE FR IT**

(30) Priority: **26.01.2001 US 58947**

(43) Date of publication of application:
**29.12.2010 Bulletin 2010/52**

(62) Document number(s) of the earlier application(s) in
accordance with Art. 76 EPC:
**02704165.6 / 1 354 184**

(73) Proprietor: **Bridgestone/Firestone North
American Tire LLC
Nashville, Tennessee 37214 (US)**

(72) Inventors:
 • **Turner, John L.
  Akron, OH 44313 (US)**
 • **Stalnaker, David O.
  Akron, OH 44362 (US)**

(74) Representative: **Raffay & Fleck
Patentanwälte
Grosse Bleichen 8
20354 Hamburg (DE)**

(56) References cited:
**EP-A2- 0 890 918    US-A- 3 563 088
US-A- 5 610 330**

 • **DEEPAK PAREKH ET AL.: "Laboratory Tire Wear
  Simulation Process Using ADAMS Vehicle
  Model", SAE TECHNICAL PAPER SERIES,
  961001, 1 February 1996 (1996-02-01), pages 1-10,
  XP002727896, DOI: 10.4271/961001**
 • **D. STALNACKER ET AL.: "Indoor Simulation of
  Tire wWear: Some case studies", TIRE SCIENCE
  AND TECHNOLOGY, vol. 24, no. 2, 30 April 1996
  (1996-04-30) , pages 94-118, XP002727897, DOI:
  10.2346/1.2137517**
 • **OLIVIER LE MAÎTRE ET AL.: "Evaluation of Tire
  Wear Performance", SAE TECHNICAL PAPER
  SERIES, 980256, 23 February 1998 (1998-02-23),
  pages 43-48, XP002727898, DOI: 10.4271/980256**

EP 2 267 426 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

Technical Field

The present invention generally relates to methods of wear testing tires and, more particularly, to a method for defining a tire load history that is used in an indoor wear test. Specifically, the present invention relates to a method of defining a tire load history and using the tire load history to conduct an indoorwear test on the tire.

Background Information

Automobile and tire manufacturers desire wear testing to be performed on tires. Different methods of wear testing tires are known in the art. In one known method, the test tires are placed on a vehicle that will be frequently driven. The tires are measured after the vehicle is driven a selected number of miles. Another known test procedure is performed indoor on a wear test drum. A wear test drum provides a rotating surface that engages the tire to simulate a road surface. The wear test drum provides mechanisms for varying the force between the tire and the rotating surface. The velocity of the rotating surface may also be varied. The user may simulate actual public road driving conditions by varying these forces and the velocity. The problem in the prior art is that the user cannot easily determine what forces and velocities to use to simulate public road driving conditions for a specific vehicle.

For instance, one may wish to simulate tire wear with a specific tire on a specific vehicle over a daily commute that includes country road, highway, and city road driving conditions. The total length of the daily commute over a one year period may be 15,000 miles. The forces between the tire and the road constantly change through this commute and the person conducting the indoor wear test desires to accurately simulate these forces on the test tire with the indoor test drum.

One method of predicting the tire forces is to instrument a test car with wheel force transducers that are mounted as part of the wheel and rotate with the wheel/tire assembly while the vehicle is driven over a controlled test track. The vehicle is equipped with a data acquisition system that stores signals from the transducers. For instance, front and rear radial force, lateral force, drive/brake force, and tire velocities may be recorded. The angular position of each transducer must also be recorded because the transducers rotate with the tires. A problem with this measurement system is that the equipment is difficult to transport from test location to test location, the setup time is long, and the vehicle cannot be driven on public roads while equipped with the transducers. The data is thus only gathered on a test track that simulates public road driving conditions. The process of gathering the force histories for a given car with a given tire is expensive and often consumes weeks of time. The process must be repeated for different cars and for different tires. The art thus desires a faster and easier method of generating tire loading histories for indoor wear tests. The art also desires that the method for generating the tire loading histories result in more accurate load histories for the test machine.

In the article Laboratory Tire Wear Simulation Process Using ADAMS Vesicle Model by Deepak Parekh et al., in SEA TECHNICAL PAPER SERIES, February 1, 1996 a method for simulating tire wear that combines computer simulation technology with indoor laboratory test is disclosed.

In the article Indoor Simulation of Tire Wear: Some Case Studies by D. Stalnack-er et al., in TIRE SCIENCE AND TECHNOLOGY, vol. 24, no. 2, April 30, 1996 some results of indoor simulation of tire wear are described and discussed.

EP 0 890 918 A2 discloses a method and a system for generating an effective road profile for use with a computer aided vehicle design system.

## SUMMARY OF THE INVENTION

The present invention provides a method for determining tire load histories for use with an indoor wear test machine. Sample tire forces are measured with a test system. The data from the test system is used to create formulas that relate the tire forces to the accelerations experienced by the vehicle. An instrumented vehicle driven over a wear test course records data about the vehicle while it is driven over the course. This data is used with the formulas to create the input forces for an indoor wear test machine.

The invention also provides a method of translating the data gathered from the outdoor test vehicle into tire load data that may be used to operate an indoor tire wear test drum to perform an indoor tire wear test.

The invention can be seen in a method of wear testing a tire comprising the steps of: (a) characterizing a first test vehicle by selecting the first test vehicle having at least a first test tire by: i. measuring the three dimensional forces experienced by the at least one tire under a variety of driving conditions, and measuring the fore-aft and lateral accelerations and velocities of the first test vehicle when the three directional forces are measured, iii, (creating formulas that relate the first test vehicle accelerations and velocities to the three directional forces experienced by the at least one tire; (b) characterizing a wear course by: iv. measuring the fore-aft and lateral accelerations experienced by the first or a second test vehicle when the first or a second test vehicle is driven over the wear test course and v. measuring the velocities of the first or second test vehicle when the first or second test vehicle is driven over the wear test course; (c) predicting force data that represent the forces that would be experienced by the first test vehicle tire if the first test vehicle was driven over the characterized wear test course; by (d) substituting the wear course accelerations and velocities for the vehicle characterisation step accelerations and velocities in the formulas created in step (iii), for the at least one test tire and; (e) using the force data to drive an indoor tire wear test machine.

In a preferred method steps (i) and (ii) are performed by mounting measuring devices to a vehicle and driving the vehicle over the wear course. Further, it is preferred when the measurements are recorded by instruments mounted on the vehicle. In an improved method the measuring devices are mounted inside the vehicle. It is preferred when step (iii) is performed by moving a tire mounted to a vehicle over a force platform. Preferably the wear test course includes public roads. The method is even further preferred when step a.iii. further includes the step of compensating at least one of the directional forces based on the turning radius of the vehicle.

BRIEF DESCRIPTION OF THE DRAWINGS

Fig. 1 is a schematic view of a dual force platform test facility.

Fig. 2 is a schematic view of a wear test course being driven by a test vehicle.

Fig. 3 is a schematic view of the instrumented vehicle depicted in Fig. 2.

Fig. 4 is a schematic view of a vehicle showing the different steering angles of the front tires.

DETAILED DESCRIPTION OF THE DRAWINGS

The method of the present invention is generally performed by first characterizing the vehicle for which the tire is being wear tested. The method also requires a wear test course to be measured with a vehicle. The invention combines the course measurements with the vehicle characterization to create a load history that is used to drive an indoor mechanical wear test machine to wear test the tire. The resulting wear test accurately reflects the wear on the tire if the tire had been used on the vehicie over the test course. The invention allows the wear test to occur indoors without the hassle of mechanical breakdowns over a much shorter time than in the past. In addition to the convenience and time advantages, the test courses may be used with any vehicle characterizations to allow different vehicles to be tested on a single course. In addition, different courses may be used with a single vehicle characterization to compare how a tire will perform with a vehicle on different courses. The uncontrolled effect of weather variability is also avoided.

Vehicle Characterization:

The vehicle characterization step of this method measures the forces experienced by the tires of a vehicle under a variety of driving conditions. The vehicle characterization step is performed on the vehicle on which the tires are to be wear tested for. For instance, if the tire to be wear tested is going to be used on a specific passenger car, the specific passenger car - or a similar car - should be used during the vehicle characterization step.

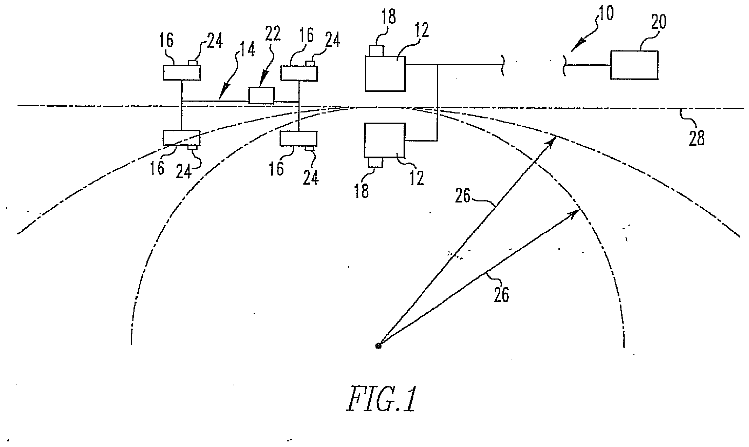

The vehicle characterization step may be repeated for each type of vehicle for which a tire is to be wear tested. The vehicle characterization data may be gathered using a dual force platform measurement system 10 (Fig. 1).

One system known in the art is referred to as AMTI Model OR6-5-2000. This system includes in-ground force platforms 12 configured to be driven over by the vehicle 14. The platform spacing is adjustable to accommodate different vehicle track widths. When the tires 16 of the vehicle 14 engage the force platforms 12, three directional forces (fore-aft (Fx), lateral (Fy), and vertical (Fz)) are measured by transducers 18 and recorded by an appropriate storage device 20 such as a computer. The data may be immediately stored by computer 20 or stored in an intermediate storage device and then stored in computer 20. Transducers 18 may be in communication with storage device 20 by wires or wireless transmissions. A measurement device may be used to measure the speed of vehicle 14. In another embodiment of the invention, the vehicle speed may be processed from the data gathered as tires 16 pass over platforms 12.

In addition to the directional force measurements, transducers 22 are positioned at the vehicle center of gravity to measure accelerations (fore-aft and lateral) during passage of tires 16 across force platforms 12. Appropriate wheel inclination measurement devices 24 are also used to measure the wheel inclination angles while tires 16 are passing over force platforms 12. One type of wheel inclination angle measurement device is disclosed in United States

Patent 5,561,244. Data from the two load platforms, the in-vehicle measurement of accelerations, and from the wheel inclination device are collected simultaneously.

The directional forces, velocity, accelerations, and wheel inclination angles are measured while vehicle 14 passes over platforms 12 at a range of speeds (for example, 2 to 20 miles per hour), turn radii 26 (for example, 30 feet to 200 feet), and straight driving acceleration/deceleration conditions 28 (for example, +0.5 g to -0.5 g). These test conditions span typically encountered levels of steering, cornering acceleration, braking acceleration, forward acceleration, and straight uniform motion produced in most day to day driving conditions on public roads and highways.

Course Characterization:

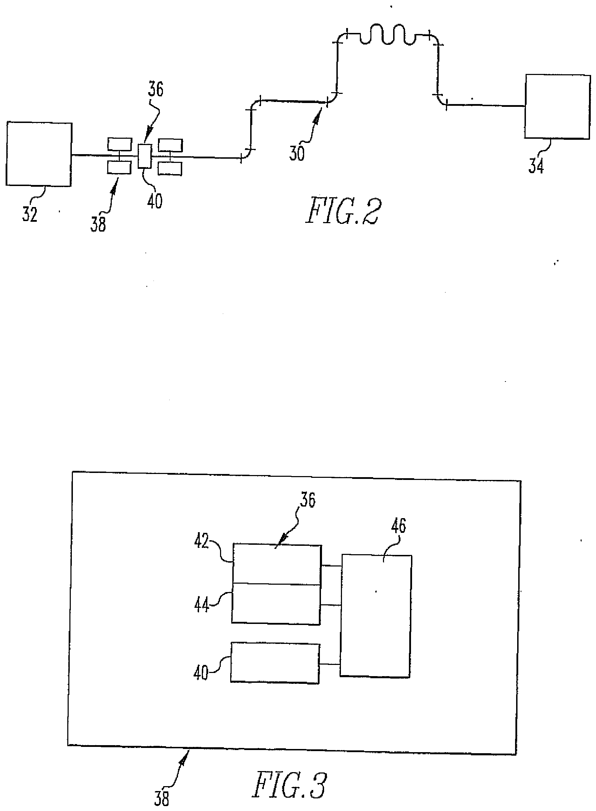

Another step of the method of the present invention is to characterize a wear test course. A wear test course may be any test course of interest in which a tire manufacturer or automobile manufacturer is interested in gathering tire wear test information. For instance, the wear test course may be a typical commute for a target driver. In Fig. 2, a commuting wear course 30 includes a starting position at the driver's residence 32 and a final position at the driver's place of employment 34. The test course also may be a city driving course that would be typically used by a taxi cab driver. The type of wear test courses available to the method of the present invention are essentially limitless.

Test course 30 is characterized by installing a measuring device 36 in a vehicle 38 that measures fore-aft and lateral acceleration of the vehicle center of gravity while it is driven over course 30. An advantage is that test vehicle 38 does not have to be identical to test vehicle 14 described above. Another measurement device 40 records the velocity of the vehicle. Device 40 may be one that does not contact the road surface in order to determine velocity. Alternatively, device 40 measures the steering angle of vehicle 38 rather than the vehicle velocity. In one embodiment of the invention, two accelerometers 42 and 44 are used to measure the fore-aft acceleration and the lateral acceleration. An appropriate data storage device 46 such as a personal computer may be in communication with measurement devices 40,42, and 44 to record test data at regular intervals while vehicle 38 is driven over test course 30. In one embodiment, the data is recorded every three feet of travel over the entire wear test course 30. One advantage of this step over prior methods is that the instrumentation required to gather this data may be placed inside the vehicle allowing the vehicle to remain "street legal" and driven over public roads. In the past, the instrumentation was on the outside of the vehicle. The present invention also prevents inclement weather from ruining the data gathering steps. Another advantage is that devices 40,42, and 44 are compact and may be easily shipped. The measurements devices may also be quickly installed in the test vehicle.

The data gathered over the wear test course 30 is stored and creates a mathematical test course that can be applied to different vehicles. Each cornering maneuver, each braking and acceleration event, every hill and town captured and reproduced, in real-time, in this mathematical test course. The user may drive muttipte test courses in orderto create a library of test courses that may be applied to vehicles as desired.

Model Development:

After the user has characterized a vehicle, the user develops equations that relate the fore-aft (Fx), lateral (Fy), and vertical forces (Fz) to the fore-aft acceleration (Ax), lateral acceleration (Ay), and velocity (Vx) (or steering angle), measured on the wear test course. The user also develops an equation that relates the inclination angle (I. A.), of the tires to the forward acceleration, lateral acceleration, and velocity (or steering angle) measured on the wear test course.

The equations are of the following generic functional form:

$$Fx = 1 (Ax, Ay, Vx)$$

$$Fy = f2 (Ax, Ay, Vx)$$

$$Fz = f3 (Ax, Ay, Vx)$$

$$I. A. = f4 (Ax, Ay, Vx)$$

Each of these equations includes coefficients that relate the accelerations and velocities to the forces. The values of the coefficients are determined by regression to give a best fit of the equation to the measured data. The equations and the coefficients constitute a vehicle model for predicting the forces and inclination angle when given the two accelerations and velocity. A separate set of equation coefficients is developed to characterize each wheel position on the vehicle. These equations are used to relate the wear test accelerations and velocities to the forces that are programmed into an indoor mechanical wear test machine.

The following table illustrates the terms used in each equation. The coefficients $a_0$ through $a_6$ are computed by least squares regression with the measured forces, inclination angles and accelerations from the vehicle characterization step. A shaded box indicates no use of that term in the equation for that independent variable. Checks, $\sqrt{}$, indicate that the term is included in the equation.

For example ; $Fz = a_0 + a_1*Ay + a_2*A_y^2 + a_3*K + a_4*K^2 + a_5*Ax$.

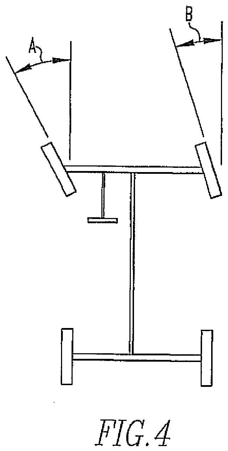

The variable K estimates road path curvature and is computed by $K = Ay/Vx^2$. The steering angle can be used in place of K if preferred. The acceleration terms are generally needed to capture load transfer due to inertia loads. The curvature terms are needed to account for forces produced by the geometric effects of the steering system. Fig. 4 shows why a vehicle steering system and vehicle geometry alters the angles of the tires with respect to the road surface.

Angle A is different from angle B and thus the front tires experience different forces based on the radius of the curve.

| TABLE OF EQUATIONS FOR VEHICLE LOAD TRANSFER CHARACTERIZATION | | | | | | | |
|---|---|---|---|---|---|---|---|
| | $a_0$ | $a_1*Ay$ | $a_2*Ay^2$ | $a_3*K$ | $a_4*K^2$ | $a_5*Ax$ | $a_6*Ax^2$ |
| Fz | $\sqrt{}$ | $\sqrt{}$ | $\sqrt{}$ | $\sqrt{}$ | $\sqrt{}$ | $\sqrt{}$ | |
| Fy | $\sqrt{}$ | $\sqrt{}$ | $\sqrt{}$ | $\sqrt{}$ | $\sqrt{}$ | $\sqrt{}$ | |
| I.A. | $\sqrt{}$ | $\sqrt{}$ | $\sqrt{}$ | $\sqrt{}$ | $\sqrt{}$ | $\sqrt{}$ | |
| Fx | $\sqrt{}$ | | | $\sqrt{}$ | $\sqrt{}$ | $\sqrt{}$ | $\sqrt{}$ |

After the regressions are completed for Fx, one additional term, $a_7*Vx^2$, is added to the Fx equation to help account for aerodynamic drag for tires on drive positions. The coefficient of this term is determined from the product of the aerodynamic drag coefficient and frontal area of the vehicle (determined from other sources). The contribution from this term is typically insignificant at the relatively low vehicle velocities used during the vehicle characterization process.

One additional modification is required if the indoor wear test machine (discussed in the next section) requires the spindle torque (My) as an input instead of Fx. In this case, an empirical, linear relationship between My and Fx is determined from a separate force and moment test machine for the tires under consideration and this relationship is used convert from Fx to My.

Indoor Mechanical Wear Test:

Once the equations relating the accelerations and velocities are known, the user may program an indoor mechanical wear test machine (such as the MTS Model 860 RoadWheel Tread Wear Test System) to simulate the outdoor wear test course. The user selects a characterized wear test course and calculates the forces as they relate to time for the vehicle. These forces are input into the indoor mechanical wear test machine and a number of miles is selected for the test. The indoor mechanical weartest machine rotates the tire against the drum and creates the forces input by the user. The wear test machine continuously repeats the wear test course as if the tire was being driven over the wear test course for the selected number of miles. For instance, the user may test the tire over a commuting course for 15,000 miles.

The method of the present invention allows tires to be efficiently and accurately wear tested using indoor testing equipment. The method allows the indoor testing equipment to effectively simulate each tire position of a particular vehicle traveling on a specific outdoor road wear course. The method allows the characterized vehicles to be tested on any characterized wear test course and allows a single wear test course to be used with any characterized vehicle.

**Claims**

1. A method of wear testing a tire using an indoor tire wear test machine, **characterized by** the steps of

   a. characterizing a first test vehicle (14) by selecting the first test vehicle having at least a first test tire (16) by

       i. measuring the three directional forces experienced by the at least one tire (16) under a variety of driving conditions and
       ii. measuring the fore-aft and lateral accelerations and velocities of the first test vehicle (14) when the three directional forces are measured;
       iii. creating formulas that relate the first test vehicle (14) accelerations and velocities to the three directional forces experienced by the at least one tire (16):

   b. characterizing a wear test course (30) by

       iv. measuring the fore-aft and lateral accelerations experienced by the first (14) or a second (38) test vehicle when the first (14) or a second (38) test vehicle is driven over the wear test course (30) and
       v. measuring the velocities of the first (14) or second (38) test vehicle when the first (14) or second (38) test vehicle is driven over the wear test course;

   c. predicting force data that represent the forces that would be experienced by the first test vehicle tire if the first test vehicle (14) were driven over the characterised wear test course (30) by
   d. substituting the wear course accelerations and velocities for the vehicle characterisation step accelerations and velocities in the formulas created in step (iii), for the at least one test tire (16) and;
   e. using the predicted force data to drive an indoor tire wear test machine.

2. The method of claim 1, wherein step a. includes measuring the wheel inclination angle of the at least first test tire while measuring the accelerations and velocity.

3. The method of claim 2, wherein step a.iii. includes the step of creating a formula that relates the wheel inclination angle to the accelerations and velocity of the vehicle.

4. The method of claim 1, wherein step i is performed by moving the at least one tire mounted to the first test vehicle over a force platform (10).

5. The method according to one of the preceding claims, wherein step (b) is performed by mounting measuring devices inside the first (14) or second (38) test vehicle and driving the first (14) or second (38) test vehicle over the wear test course.

6. The method according to one of the preceding claims, wherein the wear test course includes public roads.


**Patentansprüche**

1. Verfahren zur Verschleißprüfung eines Reifens unter Verwendung einer Hallen-Reifenverschleißprüfungsmaschine, **gekennzeichnet durch** die Schritte

   a. Charakterisieren eines ersten Testfahrzeugs (14) **durch** Auswählen des ersten Testfahrzeugs mit wenigstens einem ersten Testreifen (16) **durch**

       i. Messen der drei Richtungskräfte, die der mindestens eine Reifen (16) unter einer Vielfalt an Fahrbedingungen erfährt, und
       ii. Messen der Längs- und Seitenbeschleunigungen und -geschwindigkeiten des ersten Testfahrzeugs (14), wenn die drei Richtungskräfte gemessen werden;
       iii. Erzeugen von Formeln, welche die Beschleunigungen und Geschwindigkeiten des ersten Testfahrzeugs (14) mit den drei Richtungskräften, die der mindestens eine Reifen (16) erfährt, in Zusammenhang bringen:

   b. Charakterisieren einer Verschleißprüfungsbahn (30) **durch**

iv. Messen der Längs- und Seitenbeschleunigungen, die das erste (14) oder ein zweites (38) Testfahrzeug erfährt, wenn das erste (14) oder ein zweites (38) Testfahrzeug über die Verschleißprüfungsbahn (30) gefahren wird, und

v. Messen der Geschwindigkeiten des ersten (14) oder zweiten (38) Testfahrzeugs, wenn das erste (14) oder zweite (38) Testfahrzeug über die Verschleißprüfungsbahn gefahren wird;

c. Voraussagen von Kraftdaten, welche die Kräfte darstellen, die der Reifen des ersten Testfahrzeugs erfahren würde, wenn das erste Testfahrzeug (14) über die charakterisierte Verschleißprüfungsbahn (30) gefahren würde, **durch**

d. Ersetzen der Beschleunigungen und Geschwindigkeiten des Fahrzeugcharakterisierungsschritts in den in Schritt (iii) erzeugten Formeln **durch** die Beschleunigungen und Geschwindigkeiten von der Verschleißbahn für den mindestens einen Testreifen (16) und

e. Verwenden der vorausgesagten Kraftdaten, um eine Hallen-Reifenver-schleißprüfungsmaschine anzusteuern.

2. Verfahren nach Anspruch 1, wobei Schritt a. das Messen des Radneigungswinkels des wenigstens ersten Testreifens während der Messung der Beschleunigungen und der Geschwindigkeit umfasst.

3. Verfahren nach Anspruch 2, wobei Schritt a.iii. den Schritt des Erzeugens einer Formel umfasst, die den Radneigungswinkel mit den Beschleunigungen und der Geschwindigkeit des Fahrzeugs in Zusammenhang bringt.

4. Verfahren nach Anspruch 1, wobei Schritt i durchgeführt wird, indem der mindestens eine Reifen, der an dem ersten Testfahrzeug befestigt ist, über eine Kraftplattform (10) bewegt wird.

5. Verfahren nach einem der vorstehenden Ansprüche, wobei Schritt (b) durchgeführt wird, indem Messeinrichtungen im Inneren des ersten (14) oder zweiten (38) Testfahrzeugs befestigt werden und das erste (14) oder zweite (38) Testfahrzeug über die Verschleißprüfungsbahn gefahren wird.

6. Verfahren nach einem der vorstehenden Ansprüche, wobei die Verschleißprüfungsbahn öffentliche Straßen umfasst.

## Revendications

1. Procédé de test d'usure d'un pneu à l'aide d'une machine de test d'usure de pneus en intérieur, **caractérisé par** les étapes consistant à

a. caractériser un premier véhicule d'essai (14) en sélectionnant le premier véhicule de test comportant au moins un premier pneu de test (16)

i. en mesurant les trois forces directionnelles subies par le ou les pneus (16) dans un grand nombre de conditions de conduite et

ii. en mesurant les accélérations d'avant en arrière et latérales ainsi que les vitesses du premier véhicule de test (14) lorsque les trois forces directionnelles sont mesurées ;

iii. en créant des formules qui relient les accélérations et les vitesses du premier véhicule de test (14) aux trois forces directionnelles subies par l'au moins un pneu (16) ;

b. caractériser un parcours de test d'usure (30)

iv. en mesurant les accélérations d'avant en arrière et latérales subies par le premier (14) ou un deuxième (38) véhicule de test lorsque le premier (14) ou un deuxième (38) véhicule de test est conduit sur le parcours de test d'usure (30) et

v. en mesurant les vitesses du premier (14) ou du deuxième (38) véhicule de test lorsque le premier (14) ou le deuxième (38) véhicule de test est conduit sur le parcours de test d'usure ;

c. prévoir des données de forces qui représentent les forces qui seraient subies par le pneu du premier véhicule de test si le premier véhicule de test (14) était conduit sur le parcours de test d'usure caractérisé (30)

d. en remplaçant les accélérations et les vitesses de l'étape de caractérisation du véhicule dans les formules créées à l'étape (iii) par les accélérations et les vitesses du parcours de test d'usure pour le ou les pneus de test (16) et ;

e. utiliser les données de force prévues pour exploiter une machine de test d'usure de pneus en intérieur.

2. Procédé selon la revendication 1, dans lequel l'étape a. inclut la mesure de l'angle d'inclinaison de roue du premier pneu de test au moins tout en mesurant les accélérations et la vitesse.

3. Procédé selon la revendication 2, dans lequel l'étape a. iii. inclut l'étape consistant à créer une formule qui relie l'angle d'inclinaison de la roue aux accélérations et à la vitesse du véhicule.

4. Procédé selon la revendication 1, dans lequel l'étape i est exécutée en déplaçant le ou les pneus montés sur le premier véhicule de test sur une plateforme de force (10).

5. Procédé selon l'une quelconque des revendications précédentes, dans lequel l'étape (b) est réalisée par le montage de dispositifs de mesure à l'intérieur du premier (14) ou du deuxième (38) véhicule de test et en conduisant le premier (14) ou le deuxième (38) véhicule de test sur le parcours de test d'usure.

6. Procédé selon l'une quelconque des revendications précédentes, dans lequel le parcours de test d'usure inclut des routes publiques.

FIG.1

36

38    40    32

30    34

*FIG.2*

36

42    46

44

40

38    *FIG.3*

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0890918 A2

- US 5561244 A

**Non-patent literature cited in the description**

- **DEEPAK PAREKH et al.** Laboratory Tire Wear Simulation Process Using ADAMS Vesicle Model. *SEA TECHNICAL PAPER SERIES,* 01 February 1996

- **D. STALNACK-ER et al.** Indoor Simulation of Tire Wear: Some Case Studies. *TIRE SCIENCE AND TECHNOLOGY,* 30 April 1996, vol. 24 (2